# EUROPEAN PATENT SPECIFICATION

(11) **EP 0 615 603 B1**
(45) Date of publication and mention of the grant of the patent: **31.01.1996**
(21) Application number: 93910438.6
(22) Date of filing: 28.04.1993
(51) Int. Cl.: F24F 3/16

(54) **A METHOD AND A SYSTEM FOR DISINFECTING AIR IN AIR CONDITIONING DUCTS**
VERFAHREN UND VORRICHTUNG ZUR DESINFEKTION VON LUFT IN KLIMAANLAGEN
PROCEDE ET SYSTEME DE DESINFECTION DE L'AIR DANS LES CONDUITS D'AIR DE CLIMATISATION

(30) Priority: 28.04.1992 CH 1375/92; 28.07.1992 CH 1375/92
(43) Date of publication of application: 21.09.1994
(73) Proprietor: WEIBEL, René, CH-4055 Basel (CH)
(72) Inventor: WEIBEL, René, CH-4055 Basel (CH)
(74) Representative: Mommaerts, Johan Hendrik, Dipl.-Phys.
(86) International application number: PCT/NL93/00089
(87) International publication number: WO 93/22603

(56) References cited:
- EP-A- 0 355 765
- FR-A- 2 414 337

## Description

When, in closed spaces, air is supplied by means of air supply and/or conditioning ducts, it is to be avoided that irritating or harmful germs, in particular fungi, algae, microbes, viruses and the like, will be introduced into the space since they can harm the health or at least the comfort of persons present therein.

An objection of air filters is that they will generally procure an incomplete removal of such germs, so that the germs let through can develop further, and, when improving the filtering efficiency, the pressure drop over such filters will increase accordingly. In the case of moist and warm air very favourable conditions for the growth of such germs can occur.

A good air disinfection is especially important when a substantial part of the air introduced into the closed space is recycled, as, for instance, in aeroplanes.

Eliminating germs by means of poisonous substances is not allowed in most countries, if these substances can reach the space in which persons are present. EP-A 0 355 765 discloses a method according to the preamble of present claim 1.

The invention provides a method for the above-mentioned purpose as defined in claims 1 to 3.

The non-poisonous disinfectant kills fungi, algae and similar organisms, and is active not only in the air flow itself, but, by precipitation thereof on the walls of the duct, also in a prolonged way on the germs precipitating thereon which may return again in the airflow later, so that also these germs can be effectively suppressed. When, moreover, the air is ionised, not only microbes and viruses will be effectively suppressed, but also the vapourised disinfectant particles will be charged, so that they will deposit faster on the duct walls. When the air flowing through the duct is to be moistened, preferably the same disinfectant is added to the water used therefor, in order to counteract thereby the introduction of harmful germs into the duct.

The system for executing this method is defined in claims 4 and 5, the preamble of claim 4 being known from FR-A-2 414 337.

The invention will be elucidated below in more detail by reference to a diagrammatic drawing of a non-limiting embodiment of a system according to the invention.

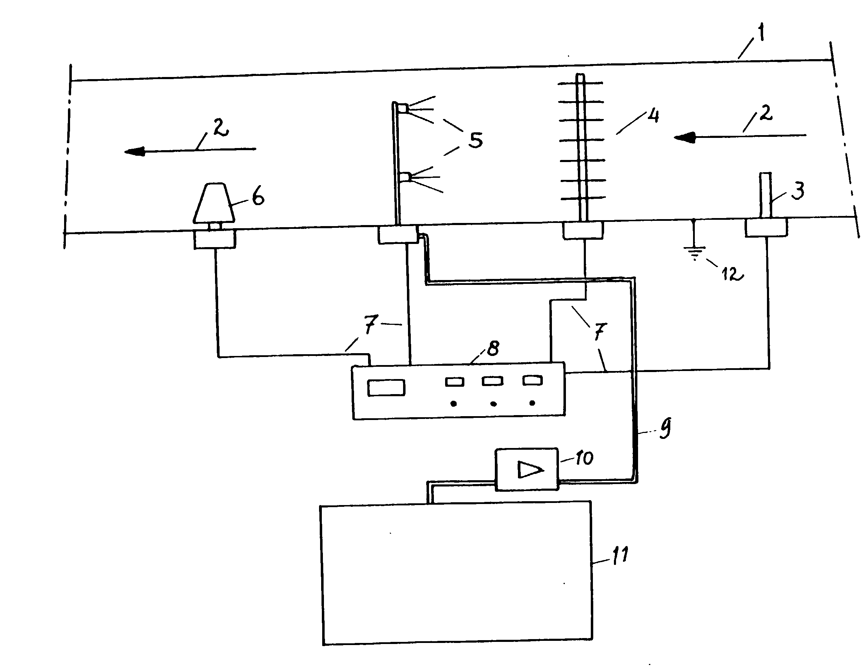

The system shown in the drawing comprises a part of an air ventilation duct 1, the air flow flowing therein being indicated by arrows 2.

In the duct 1, as seen in the flow sense, are consecutively arranged a flow sensor 3, an assembly 4 of particularly needle-shaped air ionisation electrodes, an assembly 5 of disinfectant vaporisers, and an ozone sensor 6.

These elements are connected, by means of electric leads 7, with a control apparatus 8 which also comprises a high-voltage source for the electrodes 4, the vaporisers 5 being connected, by means of a tube 9, with a pump 10 which can pump the disinfectant dissolved in water from a reservoir 11.

The flow sensor 3 is adapted to disconnect the pump 10, and, if required, also the electrodes 4, if the air flow 2 decreases below a given threshold value, and it is also possible to adapt the operation of the pump 10 to the air flow rate. The ozone sensor 6 is adapted to lower the voltage at the electrodes 4 if an ozone content threshold is exceeded. This voltage should, generally, be lower than 10 kV. In this manner >10¹ ions/s can be produced at a current intensity of some µA.

The air ionisation, in particular when producing negative ions, will cause microbes, viruses and similar micro-organisms present in the air flow to be annihilated. A very important effect of this ionisation is, furthermore, that the disinfectant particles are being charged too. Thereby these particles will be driven towards the duct walls, which, as indicated at 12, are grounded, so that these particles will deposit on the walls. If, now, fungi, algae or the like also deposit on the walls, they will be killed, or at least their growth will be inhibited, by the continued contact with the disinfectant in such a degree that no dangerous growth thereof will occur.

Since the air flow in the duct 1 will, eventually, reach the working or living space, the disinfectant should comply with the most severe requirements imposed by public health services. Therefore it definitely should not contain mercury, formaldehyde, phenol or the like, and, because of fire hazard, in particular in the case of ionisation, the use of alcohol is not allowed either.

The disinfectant used according to the invention is a quaternary ammonium compound, commercially available under the name "Dessair 2000", and being approved by the Swiss inspection service as being non-poisonous ("Giftklasse Frei" BAG T 73512 DC).

This disinfectant consists of a quaternary ammonium complex, in particular a benzyl ammonium chloride, such as n-octyldimethyl, 1,1,3,3-tetrabutyl phenoxy ethyldimethyl or 1,1,3,3-tetrabutyl-o-ethoxydimethyl benzyl ammonium chloride. The invention is, however, not restricted to these examples.

This disinfectant is sold in concentrated form (16 % active substance), and the concentrate will, for example, be added to the water in the reservoir 11 in a ratio of 1:100. Preferably demineralised water is used therefor.

The mist particles formed by the vaporisers 5 having, for example, a mean size of about 50 µm, precipitate on the walls of the duct, in particular because they obtain a charge by the ionisation of the air, causing them to be attracted towards the duct walls, and then the water can evaporate for the greater part. Some decomposition may take place, which, however, will not lead to noxious products. This disinfectant is, moreover, active against (in particular disagreeable) smells.

When air moistening is required, water can be vaporised in a suitable point of the duct 1 and under control of the control apparatus 8, and, as a matter of fact, a humidity sensor can be used then. Preferably the same disinfectant is added to the water used therefor so as to counteract the introduction of fungi, algae and the like.

The system can, for instance, comprise a microprocessor, and can be connected to remote indicating and/or adjusting means allowing remote control or measurement.

## Claims

1. A method for disinfecting air in ventilation ducts, in which a non-poisonous and substantially non-volatile disinfectant in water, in particular a quaternary ammonium complex, is vaporised into the air flow in the duct as an aerosol by means of micro-vaporisers, **characterised** in that the air in the duct is ionised without a substantial ozone production, and at least the disinfectant particles suspended in the air being electrically charged thereby, the walls of the duct being kept at substantially ground potential, such that the charged suspended particles will deposit faster on said duct walls.

2. The method of claim 1, **characterised** in that the disinfectant is dissolved in an amount of about 0,16 % in water, an amount of about 0,06..0,08 ml/m3 being vaporised in the air at an over-pressure of about 0,35 MPa at an average vapour particle size of about 50 µm.

3. The method of claim 1 or 2, **characterised** in that the disinfectant is added to water to be used for air moistening.

4. A system for executing the method of any one of claims 1 to 3, comprising an air duct portion (1) with means for disinfecting the air flow (2) therein, and an assembly of vaporising nozzles (5) connected to a reservoir (11) for dissolved disinfectant connected with control means (10), **characterised** in that, in the duct (1), particularly needle-shaped ionisation electrodes (4) are provided which are adapted to ionise the air (2) and charge the vapourised disinfectant particles flowing through the duct (1), which electrodes (4) are connected to a high-voltage source, and in that at some distance down-flow of these electrodes (4) an ozone sensor (6) is arranged which is connected to control means (8) adapted to control the high-voltage source in such a manner that substantially no ozone is produced in the air (2), the walls of the duct (1) being kept substantially at ground potential.

5. The system of claim 4, **characterised** in that, in the connection between the nozzles (5) and the reservoir (11), a metering pump (16) is included, and in that a flow meter (3) is arranged in the duct (1), which is adapted to disconnect the metering pump (10) by means of the control means (8) as soon as the air flow (2) decreases below a given boundary value, and, if required, to regulate the operation of the metering pump (10) as a function of the air flow (2).

## Patentansprüche

1. Verfahren zum Desinfizieren der Luft in einem Ventilationskanal mit Hilfe eines ungiftigen und im wesentlichen nicht flüchtigen, in Wasser gelösten Desinfektionsmittels, wie eine quarternäre Ammoniumverbindung, die mittels Mikrozerstäubern als Aerosol in den Luftstrom des Kanals gebracht wird, dadurch gekennzeichnet, dass die Luft im Kanal ionisiert wird, ohne dass dabei wesentlich Ozon entsteht, aber mindestens die in der Luft schwebenden Desinfektionspartikel elektrisch aufgeladen werden, während die Kanalwände auf Erdpotential gehalten werden, so dass die aufgeladenen Partikel sich schneller an den Kanalwänden absetzen.

2. Verfahren nach Patentanspruch 1, dadurch gekennzeichnet, dass das zu 0,16% in Wasser gelöste, konzentrierte Desinfektionsmittel in Verdünnung von 0,06 - 0,08 ml/m³ zerstäubt wird mit einem Ueberdruck von 0,35 MPa und einer Partikelgrösse von etwa 50 µm.

3. Verfahren nach Patentanspruch 1 oder 2, dadurch gekennzeichnet, dass das Desinfektionsmittel dem zur Luftbefeuchtung dienenden Wasser beigefügt wird.

4. Anlage zur Durchführung des Verfahrens nach einem der Ansprüche 1 bis 3 mit einem Lüftungskanal (1), in welchem Mittel zur Desinfektion des Luftstromes (2) angebracht sind, mit einer Vorrichtung mit Zerstäuberdüsen (5), die mit einem Reservoir (11) für das gelöste Desinfektionsmittel und einer Pumpe (10) verbunden sind, dadurch gekennzeichnet, dass im Luftkanal (1) nadelförmige Ionisierungselektroden (4) angebracht sind, welche die Luft ionisieren und die im Luftstrom (2) im Kanal (1) schwebenden, zerstäubten Desinfektionsmittelpartikel aufladen, dass die Elektroden (4) mit einer Hochspannungsquelle verbunden sind und dass in einigem Abstand stromabwärts von den Elektroden (4) ein Ozonsensor (6) angebracht ist, der mit einer Regelvorrichtung (8) verbunden ist, welche die Hochspannungsquelle so regelt, dass in der Luft (2) im wesentlichen kein Ozon entsteht, während die Wände des Kanals (1) geerdet sind.

5. Einrichtung nach Patentanspruch 4, dadurch gekennzeichnet, dass in der Verbindungsleitung zwischen den Düsen (5) und dem Reservoir (11) eine Dosierpumpe (10) eingebaut ist und dass im Kanal (1) ein Strömungsmessgerät (3) angebracht ist, welches über die Regelvorrichtung (8) die Dosierpumpe (10) abschaltet, sowie der Luftstrom (2) einen bestimmten Schwellenwert unterschreitet, um damit gegebenenfalls die Wirkung der Dosierpumpe (10) in Funktion des Luftstromes (2) anzupassen.

## Revendications

1. Procédé pour la désinfection de l'air dans les conduits de ventilation, dans lequel un désinfectant non-toxique et pratiquement non-volatil en solution aqueuse, en particulier un complexe d'ammonium quaternaire, est pulvérisé dans l'air s'écoulant dans le conduit sous forme d'un aérosol au moyen de micro-pulvérisateurs, **caractérisé** en ce que l'air dans le conduit est ionisé sans production substantielle d'ozone, et au moins les particules de désinfectant en suspension dans l'air sont ainsi chargées électriquement, les parois du conduit étant maintenues pratiquement au potentiel de la terre, de telle sorte que les particules chargées en suspension se déposent plus rapidement sur les dites parois du conduit.

2. Procédé selon la revendication 1, **caractérisé** en ce que le désinfectant est dissous en une quantité d'environ 0,16 % dans l'eau, une quantité d'environ 0,06..0,08 ml/m³ étant pulvérisée dans l'air sous une surpression d'environ 0,35 MPa avec une taille moyenne des particules de brouillard d'environ 50 µm.

3. Procédé selon la revendication 1 ou 2, **caractérisé** en ce que le désinfectant est ajouté à l'eau à utiliser pour l'humidification de l'air.

4. système pour la mise en oeuvre du procédé selon l'une quelconque des revendications 1 à 3, comprenant une portion de conduit d'air (1) comportant des moyens pour la désinfection du courant d'air (2), et un ensemble d'ajutages de pulvérisation (5) relié à un réservoir (11) de désinfectant dissous relié à des moyens de commande (10), **caractérisé** en ce que, dans le conduit (1), sont disposées des électrodes d'ionisation (4) particulièrement aciculaires qui sont adaptées pour ioniser l'air (2) et charger les particules de désinfectant pulvérisé s'écoulant à travers le conduit (1), lesquelles électrodes (4) sont reliées à une source de haute tension, et en ce qu'est disposé à une certaine distance en aval de ces électrodes (4) un détecteur d'ozone (6) qui est relié un moyen de régulation (8) adapté pour commander la source de haute tension d'une manière telle qu'il n'y ait pratiquement pas d'ozone produit dans l'air (2), les parois du conduit (1) étant maintenues pratiquement au potentiel de la terre.

5. Système selon la revendication 4, **caractérisé** en ce que, dans le raccordement entre les ajutages (5) et le réservoir (11), une pompe doseuse est incluse, et en ce qu'est disposé dans le conduit (1) un débitmètre (3) qui est adapté pour déconnecter la pompe doseuse (10) par l'intermédiaire des moyens de régulation (8) dès que le courant d'air (2) diminue jusqu'à être inférieur à une valeur de consigne donnée et, si nécessaire, pour réguler le fonctionnement de la pompe doseuse (10) en fonction du courant d'air (2).
